# EUROPEAN PATENT SPECIFICATION

(11) **EP 2 790 516 B1**
(45) Date of publication and mention of the grant of the patent: **02.08.2017**
(21) Application number: 12857720.2
(22) Date of filing: 11.12.2012
(51) Int. Cl.: A21C 11/08, A23N 17/00, B29C 43/08, A23K 40/20, A23K 50/40, A23P 30/10

(54) **METHODS AND DEVICES FOR APPLYING PARTICULATES TO THE SURFACE OF MOLDED PRODUCTS**
VERFAHREN UND VORRICHTUNGEN ZUR AUFBRINGUNG VON PARTIKELN AUF DER OBERFLÄCHE GEFORMTER PRODUKTE
PROCÉDÉS ET DISPOSITIFS D'APPLICATION DE MATIÈRES PARTICULAIRES À LA SURFACE DE PRODUITS MOULÉS

(30) Priority: 16.12.2011 US 201161576562 P
(43) Date of publication of application: 22.10.2014
(73) Proprietor: Nestec S.A., 1800 Vevey (CH)
(72) Inventor: SPECK , Donald, Festus , Missouri 63028 (US); MC-GRATH , Marilyn, Glen Carbon , Illinois 62034 (US); ZYCH, Sarah, Smithton , Illinois 62258 (US)
(74) Representative: Rupp, Christian
(86) International application number: PCT/US2012/068917
(87) International publication number: WO 2013/090247

(56) References cited:
- EP-A1- 1 695 632
- US-A- 4 650 687
- US-A- 4 741 916
- US-A- 4 886 441
- US-A1- 2006 188 622
- US-A1- 2008 003 270
- US-A1- 2008 138 472
- US-A1- 2009 029 008
- US-A1- 2010 310 750

## Description

### BACKGROUND OF THE INVENTION

### Field of the Invention

The invention relates to a method for making a molded product and a corresponding rotary molding apparatus.

### Description of Related Art

At present, if particulates are applied to the surface of foods or other products and need to be entrapped by the products, the particulates are sprinkled over the surface of the products (typically using a recirculating particle applicator). A secondary operation impresses the particulates into the surface of the products. Unfortunately, the particulates and the process of impressing the particulates into the surface of the products can distort any three-dimensional design originally on the surface of the products. In addition, this process also requires the secondary impressing operation. As a result, there is a need for new methods and devices for adding particulates to molded products having a three-dimensional design without distorting the shape of the three-dimensional design. This need is acute for molded food products when it is desirable to have a pleasing three-dimensional design that is appealing to the consumer, *e.g*., three-dimensional designs on cookies, crackers, or animal treats containing particulates.

For example, EP 1 695 632A1 refers to an apparatus and method for the production of short pastry bakery products.

### SUMMARY OF THE INVENTION

It is, therefore, an object of the invention to provide an improved method and apparatus for making molded products.

This object is achieved by the subject matter of independent claims 1 and 12.

Additional and further objects, features, and advantages of the invention will be readily apparent to those skilled in the art.

### BRIEF DESCRIPTION OF THE DRAWINGS

FIG. 1 shows a rotary molding apparatus for applying particulates to molded products in an embodiment of the invention.
FIG. 2 shows a section of a die roll having molds with a three-dimensional design in an example not forming part of the invention.
FIG. 3 shows a molded product having a three-dimensional design and having particulates that do not distort the shape of the three-dimensional design in an example not forming part of the invention.

### DETAILED DESCRIPTION OF THE INVENTION

### Definitions

The term "animal" means any animal that could benefit from a molded product. The animal can include a human, avian, bovine, canine, equine, feline, hicrine, lupine, murine, ovine, or porcine animal. The animal can also be any suitable pet or companion animal.

The term "companion animal" means domesticated animals such as cats, dogs, rabbits, guinea pigs, ferrets, hamsters, mice, gerbils, horses, cows, goats, sheep, donkeys, pigs, and the like.

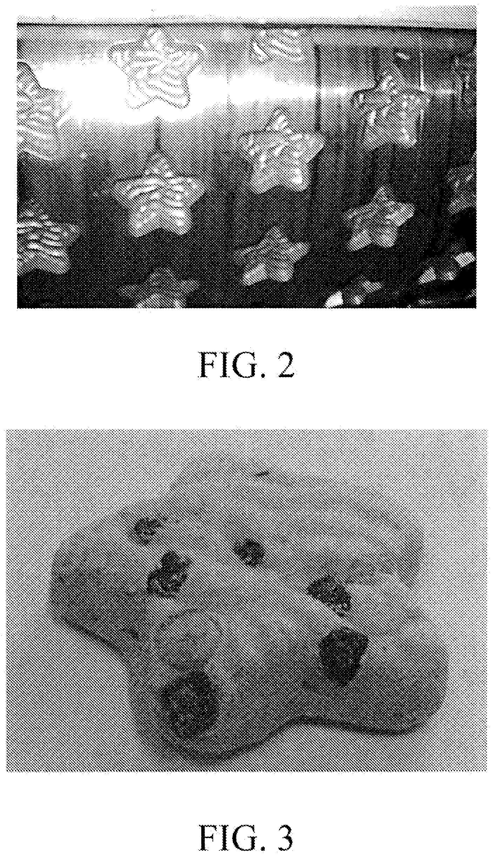

The term "three-dimensional design" means a surface have a curvature or recess in three perpendicular directions. An example of a three-dimensional design is a molded object having the design impressed into the surface as shown in FIG. 3, for example, by the noodle pattern in the mold shown in FIG. 2.

The term "undistorted" when used to describe a three-dimensional design means that a three-dimensional design obtained when particulates are impressed or impregnated into a molded product is the same as or substantially the same as a three-dimensional design that is obtained when particulates are not impressed or impregnated into the molded product.

The term "dough" means generally any substance capable of forming a molded product, *e.g*., plastics, and specifically consumable or edible substances capable of forming a molded product, *e.g*., edible doughs used to produce foods.

The term "single package" means that the components of a kit are physically associated in or with one or more containers and considered a unit for manufacture, distribution, sale, or use. Containers include, but are not limited to, bags, boxes, cartons, bottles, packages of any type or design or material, over-wrap, shrink-wrap, affixed components (*e.g*., stapled, adhered, or the like), or combinations thereof. A single package may contain one or more molded products having particulates, and the like as described herein that can be physically associated such that they are considered a unit for manufacture, distribution, sale, or use.

The term "virtual package" means that the components of a kit are associated by directions on one or more physical or virtual kit components instructing the user how to obtain the other components, *e.g*., a bag or other container containing one component and directions instructing the user to go to a website, contact a recorded message or a fax-back service, view a visual message, or contact an instructor to obtain instructions on how to use the kit or safety or technical information about one or more components of a kit.

All percentages expressed herein relating to the components of a composition are by weight of the total weight of the composition unless expressed otherwise.

As used throughout, ranges are used herein in shorthand, so as to avoid having to set out at length and describe each and every value within the range. Any appropriate value within the range can be selected, where appropriate, as the upper value, lower value, or the terminus of the range.

The devices, assemblies, kits, methods, compositions and other advances disclosed here are not limited to particular methodology, protocols and reagents described herein because, as the skilled artisan will appreciate, they may vary. Further, the terminology used herein is for the purpose of describing particular embodiments only, and is not intended to, and does not, limit the scope of that which is disclosed or claimed.

### The Invention

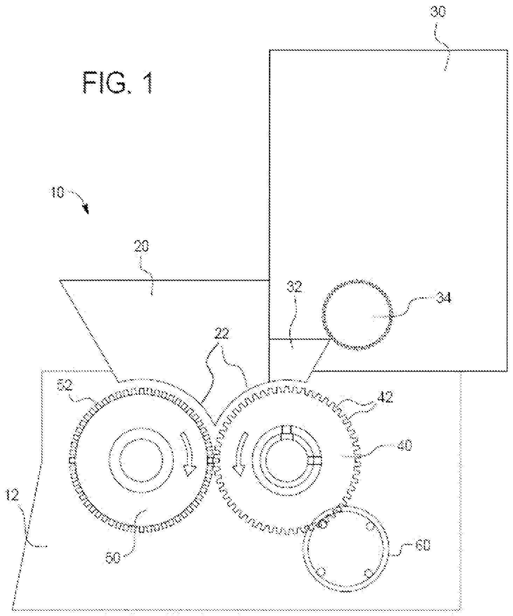

In one aspect illustrated in FIG. 1, the invention provides a rotary molding apparatus 10 including a dough hopper 20, a particulate hopper 30, a die roll 40 having one or more molds 42 in product communication with dough hopper 20 and particulate hopper 30. Specifically, die roll 40 is positioned to receive any product contained in dough hopper 20 and particulate hopper 30. Molds 42 in die roll 40 can include any suitable three-dimensional pattern therein as shown, for example, by FIG. 2. A dough feed roll 50 is adjacent to die roll 40. A particulate distributer 34 can transport particulates from particulate hopper 30 to die roll 40 via a chute 32.

In some embodiments, a continuous looping belt conveying system to extract molded product from molds 42 and move the product away from die roll 40 comprises roll 60 which is partially surrounded by a belt (not shown) which is in contact with die roll 40 and forms one side of a conveyor. In various embodiments, the die roll 40 is in contact with the means of extracting the molded product from the molds 42. In one embodiment, the means is a roll 60 partially surrounded by a conveying belt (not shown) that contacts the molded products and removes them from the molds 42 on the die roll 40. In a preferred embodiment, the roll 60 is a rubber roll and the conveying belt is cloth. Each of the above devices, such as die roll 40, rotary particulate distributer 34, dough feed roll 50, roll 60, are powered by motors or similar means and under the control of control systems that are well known in the art. Rotary molding apparatus 10 can be contained in any suitable housing 12 for allowing the devices to interact with each other as discussed above.

During operation, desired particulates are transferred from particulate hopper 30 to chute 32 via particulate distributer 34, which can be rotary. The particulates pass through chute 32 and are introduced into molds 42 of die roll 40. Immediately after, dough to be used to make the molded product contained within dough hopper 20 partially fills molds 42 of die roll 40 entrapping the particulates on the surfaces of molds 42 through opening 22 at the bottom of hopper 20. During the process of filling molds 42 with dough, dough feed roll 50 is used to complete the filling process and pushes the dough firmly into molds 42 further entrapping the particulates on the surfaces of molds 42. This also ensures that the dough takes the shape of the three-dimensional design in molds 42 while minimizing the impact of the particulates that reside in the surface of the dough. Molded products having the particulates embedded therein can then be removed from molds 42 with the aid of roll 60 in conjunction with a conveyor belt for further processing and packaging.

The invention advantageously enables the application of discernible particulates into the surface of a molded product without distorting any three-dimensionally design on the molded product. As particulates are added into the cavities of the die roll prior to rotary molding the final product, the particulates become entrapped on the surface of the product while maintaining the molded product's three-dimensional pattern and design. In prior methods, the molded products were produced with one or more three-dimensional designs and then the particulates were pressed or otherwise impressed or impregnated into the molded products. The particulates and the process of impressing or impregnating the particulates into the molded products distorted the three-dimensional designs on the products. Advantageously, the present methods avoid this distortion of the three-dimensional designs on molded products caused by the particulates and the prior methods for forming molded products with three-dimensional designs.

The molded product is any product capable of being formed in a molding process. In preferred examples not forming part of the invention, the molded product is a consumable or edible product suitable for consumption by an animal, *e.g*., a pet treat with an undistorted three-dimensional design that characterizes or identifies the treat. In other examples, the molded product is a plastic toy with embedded ornamental particulates.

When producing an edible product, the dough can be any consumable or edible dough that can be molded. The dough can include any suitable meats such as bacon or any other meat (muscle or organ) from cows, sheep, pigs, and fish. The dough can further include other edible ingredients such as grains, starches, meat meals, proteins, fibers, sugars, minerals, aromas, colors, flavors, oils, humectants, preservatives, acids, or a combination thereof in any suitable amounts.

When producing an edible product, the particulates can be any consumable or edible particulates, for example, particulates of animal or vegetable origin. Specifically, the edible particulates can include edible ingredients such as grains, starches, meats, meat meals, proteins, fibers, sugars, minerals, aromas, colors, flavors, oils, humectants, preservatives, acids, or a combination thereof in any suitable amounts.

The particulates may be of any shape (regular or irregular). The particulates can be in the molded product in any useful amount, generally an amount ranging from about 2% to about 16%. The particle sizes of the particulates can be of any size consistent with the molded product. Generally, the particle sizes vary from just large enough to be visible (0.5 mm) to as large as the molded product or as much space as the three-dimensional design used allows. For example, the particulates can range in size from about 0.5 mm to 8 mm measured at their longest side.

In an alternative aspect, the invention provides methods for making a molded product having particulates and an undistorted three-dimensional design. The methods comprise filling one or more molds in a die roll with one or more particulates, filling the molds with a dough, compressing the dough into the molds, and releasing the compressed dough from the molds to form the molded product. The molded product can then be further transported or processed, *e.g*., baked and dried as necessary. The molded product has an undistorted three-dimensional design. The method can further comprise filling a package with one or more of the molded products.

. The molded products comprise an undistorted three-dimensional design and particulates that do not distort the shape of the three-dimensional design. In various embodiments, the molded product contains particulates in an amount ranging from about 2% to about 16% by weight. Generally, the particulates have a size ranging from about 0.5 mm to about 8 mm measured at their longest side. In preferred embodiments, the molded product is a food product. In preferred embodiments, the molded food products are for consumption by companion animals such as dogs and cats. In the most preferred embodiments, the molded food products are pet food products suitable for consumption by pets such as dogs and cats. In a preferred embodiment, the molded food products are food products for dogs or cats having an undistorted three-dimensional design of a dog or a cat, respectively.

In an example not forming part of the invention a continuous production line is provided capable of manufacturing a package including a molded product comprising an undistorted three-dimensional design as described herein. More specifically, the continuous production lines can include various devices for making a package having the molded product comprising an undistorted three-dimensional design. For example, the continuous production lines can include a dough hopper and a particulate hopper for distributing the dough and particulates, respectively, on to a die roll having molds with a three-dimensional design. The continuous production lines can include a dough feed roll for pressing the dough into the molds of the roll drum. The molded products containing the particulates can then be released from the die roll. The molded products can then be filled into a package that can then be sealed or closed. A conveyor belt can be used to transport the containers from one station to another station of the continuous production lines. In various examples, the continuous product line comprises (1) an apparatus for producing molded products comprising an undistorted three-dimensional design and having particulates that do not distort the shape of the three-dimensional design and (2) a means for transporting the molded products for further processing, *e.g*., backing, drying, flavor coating, and the like. In further examples, the continuous production line further comprises a means for packaging the molded products. In other example, the continuous line further comprises a means for transporting the packaged molded products for further processing, e.g., transporting the packages to a storage facility or transport means.

In another example not forming part of the invention kits are provided comprising in a single package or in separate containers in a virtual package, as appropriate for a kit component (A) a molded product comprising an undistorted three-dimensional design and having particulates that do not distort the shape of the three-dimensional design, preferably a molded food product, and (B) one or more of (1) a description of the benefits of the molded product comprising an undistorted three-dimensional design; (2) instructions for how to administer the molded product comprising an undistorted three-dimensional design; (3) a unique food composition, other than the molded food product when the molded product is a food product; (4) a play toy; (5) a serving platter for serving the molded product comprising an undistorted three-dimensional design; or (6) a serving utensil for serving the molded product comprising an undistorted three-dimensional design.

When the kit comprises a virtual package, the kit can be limited to instructions in a virtual environment in combination with one or more physical kit components. The kits may contain the kit components in any of various combinations and/or mixtures. For example, in one example, the kit includes a container having a molded product comprising an undistorted three-dimensional design described herein and a unique food composition. In another example, the kit includes a container having a molded product comprising an undistorted three-dimensional design described herein and a serving platter.

In an alternative example not forming part of the invention a means is provided for communicating information about or instructions about a molded product comprising an undistorted three-dimensional design and having particulates that do not distort the shape of the three-dimensional design for one or more of (1) using the molded product; (2) administering the molded product comprising an undistorted three-dimensional design to an animal; (3) describing the benefits of the molded product comprising an undistorted three-dimensional design; or (4) promoting the health or wellness of an animal with the molded product comprising an undistorted three-dimensional design.

The communication means can be a document, digital storage media, optical storage media, audio presentation, or visual display containing the information or instructions. More specifically, the means can be a displayed website, a visual display kiosk, a brochure, a product label, a package insert, an advertisement, a handout, a public announcement, an audiotape, a videotape, a DVD, a CD-ROM, a computer readable chip, a computer readable card, a computer readable disk, a USB device, a FireWire device, a computer memory, or any combinations thereof.

In another aspect, a package is disclosed which includes indicia describing a molded product comprising an undistorted three-dimensional design and having particulates that do not distort the shape of the three-dimensional design. The indicia can be in the form of words, symbols, pictures, photographs, figures, or combinations thereof to show details or examples of the molded product comprising an undistorted three-dimensional design described herein. The package can further contain one or more molded products comprising an undistorted three-dimensional design and having particulates that do not distort the shape of the three-dimensional design inside a container.

In an alternative example not forming part of the invention multi-pack packages are provided including 1) a plurality of containers arranged in an array, each of the plurality of containers including a molded product comprising an undistorted three-dimensional design described herein, and 2) one or more devices for retaining the containers in the array. In various examples, the devices are boxes made from paper, plastic, polymers, or a combination thereof. In others, the devices are systems of connected plastic rings affixed to each of the containers. In still others, the devices are wrappings of plastic of similar materials, e.g., twelve cans stacked in an array and wrapped in plastic. In some examples, the multi-pack packages have one or more handles affixed to the multi-pack packages to facilitate handling and transporting the multi-pack packages.

In other example not forming part of the invention, the devices further includes one or more windows that permit the package contents to be viewed without opening the multi-pack package. In some examples, the windows are a transparent portion of the devices. In others, the windows are missing portions of the devices that permit the containers to be viewed without opening the multi-pack package.

In preferred examples, the multi-pack packages further include one or more indicia describing the contents of the containers in the packages. The indicia can be in the form of labels, printing on the packages, stickers, and the like and include words, symbols, pictures, photographs, figures, or combinations thereof to provide detail or examples of the molded product comprising an undistorted three-dimensional design described herein. In a preferred examples, a label is affixed to the multi-pack packages containing a word or words, picture, design, acronym, slogan, phrase, or other device, or combination thereof, that indicates that the content of the package contains a molded product comprising an undistorted three-dimensional design.

### EXAMPLES

The invention can be further illustrated by the following examples, although it will be understood that these examples are included merely for purposes of illustration and are not intended to limit the scope of the invention unless otherwise specifically indicated.

### Example 1

A molded treat biscuit with visible particulates embedded on the surface while retaining the surface designs as shown in FIG. 3 was made by the following procedure. The treat composition was made based on the formulation shown in Table 1. The dry ingredients - granulated sugar, wheat flour, powdered (egg, chicken, and cheese), calcium carbonate, calcium propionate, salt, flavors - were weighed in the proportions shown in Table 1 and added to a ribbon mixer. Separately, bacon and tallow slurry was prepared by emulsifying (Stephans Emulsifier) chilled bacon pieces and blending with tallow at 60°C in a 30:70 ratio. Slurry equal to 10.5% of total final product was pumped into the mixer with the dry ingredients with the mixer running. Water was added to bring the moisture in the dough to 22%. Mixing continued for 5 minutes resulting in a homogenous dough. The dough was then conveyed into the dough hopper of the rotary molder (FIG. 1). The hopper of an Omega I Applicator (Reading Baking) was filled bacon and cheese bits blended in a ratio of 70:30. The bits were cubes of about 3.2 mm sides. This applicator was attached to the rotary molder such that the bits were dispensed in to mold cavities. The dough feeder was designed such that the dough partially filled the mold cavities in the die roll before it turned downwards. In this way, the particulates in the mold cavities were pressed into the dough surface at the same time the surface shape of 3D designs of the mold was retained by the molded dough. The dough feeder roll and the die roll were counterrotating which completed the filling process of the mold cavities. The molded pieces were then extracted from the molds in the die roll by a rubber roll and conveyed to a continuous oven where they were baked at 245°C for 7.5 minutes. The baked pieces were then fed to a dryer where the moisture was reduced to 8%. The final product is shown in FIG. 3.

**Table 1**

| Ingredients | % |
|---|---|
| Emulsified Bacon and Tallow | 10.5 |
| Granulated Sugar | 4.8 |
| Wheat Flour | 68.8 |
| Powdered Egg, Chicken, and Cheese | 6.1 |
| Calcium Carbonate | 0.1 |
| Calcium Propionate | 0.3 |
| Salt (Sodium Chloride) | 0.8 |
| Natural Flavors | 0.6 |
| Cheese Bits | 2.5 |
| Bacon Bits | 5.5 |
| Total | 100 |

### Example 2

A soft moist product with embedded particulates as in Example 1 was made using the formula in Table 2 as follows. The meat slurry was prepared by grinding the mechanically deboned beef through 3.125 mm openings in a meat grinder into a jacketed stainless steel mixing tank. The other meat slurry components per Table 2 were added in the proportions shown. The mixture was heated to 77°C and then emulsified through a Stephans Emulsifier. Separately, the dry base components were weighed out in the proportions shown in Table 2 into a Mepaco steam jacketed mixer and mixed for 2.5 minutes. The meat slurry was pumped into the mixer with the dry blended ingredients during continued mixing (proportions per Table 2). The glucono delta lactone and color were then added per Table 2. The mixture was heated to 85°C by steam injection with continued mixing for 2.5 minutes and a final dough moisture of 27%. The dough was then fed to the rotary molder and embedded with particulates as in Example 1. The product was then conveyed by a Storaveyor and cooled to room temperature.

**Table 2**

| | Ingredients | % |
|---|---|---|
| Dry Base | Distilled Monoglyceride | 0.27 |
| | Starch | 9.50 |
| | Wheat Gluten | 2.62 |
| | Sucrose | 4.02 |
| | Wheat Flour | 17.46 |
| | Soy Flour | 2.37 |
| | Iodized Salt | 1.45 |
| | Prague Powder | 0.01 |
| | Texturized Vegetable Protein (Fine Ground) | 12.67 |
| | Dextrose | 5.91 |
| | Partially Hydrogenated Cottonseed Oil | 0.70 |
| | Gelatin | 0.51 |
| | Calcium Propionate | 0.21 |
| | Sorbic Acid | 0.55 |
| Meat Slurry | Mechanically Deboned Beef | 3.31 |
| | Tallow | 3.53 |
| | Glycerin | 3.06 |
| | Lecithin | 1.16 |
| | Sorbitol | 3.06 |
| | BHA | 0.006 |
| | Smoke Flavor | 0.80 |
| | Water | 6.50 |
| Others | Red Color | 0.57 |
| | Glucono Delta Lactone (GDL) | 1.30 |
| | Water | 18.45 |
| | Total (rounded) | 100 |

The discussion of references mentioned herein is intended merely to summarize the assertions made therein. No admission is made that any such patents, patent applications, publications or references, or any portion thereof, are relevant prior art for the present invention and the right to challenge the accuracy and pertinence of such patents, patent applications, publications, and other references is specifically reserved.

## Claims

1. A method for making a molded product comprising an undistorted three-dimensional design and particulates that do not distort the shape of the three-dimensional design comprising:
filling a mold (42) in a die roll (40) with one or more particulates, wherein the one or more particulates are transferred from a particulate hopper (30) by a particulate distributor (34), which is provided within the particulate hopper (30), via a chute (32) to the die roll (40);
filling the mold (42) with a dough, wherein the dough is transferred from a dough hopper (20) to the mold (42);
compressing, by a dough feed roll (50), the dough into the mold (42); and
releasing, by a rubber role (60), the compressed dough from the mold (42) to form the molded product.

2. The method of claim 1 further comprising baking the molded product.

3. The method of claim 2 further comprising drying the baked molded product.

4. The method of claim 1 further comprising filling a package with one or more of the molded products.

5. The method of claim 1 wherein the mold has one or more three-dimensional designs.

6. The method of claim 1 wherein the molded product comprises the particulates in an amount ranging from about 2% to about 16% by weight.

7. The method of claim 1 wherein the particulates having a size ranging from about 0.5 mm to about 8 mm.

8. The method of claim 1 wherein the molded product is a food product.

9. The method of claim 8, wherein the food product is a companion animal food product, wherein preferably the companion animal food product is a dog food product or wherein preferably the food product is a cat food product.

10. The method of claim 9, wherein the three-dimensional design on the dog food product is a dog.

11. The method of claim 9, wherein the three-dimensional design on the cat food product is a cat.

12. A rotary molding apparatus comprising:
a dough hopper (20);
a particulate hopper (30);
a particulate distributor (34) within the particulate hopper (30);
a die roll (40) having at least one mold (42) in communication with the dough hopper (20) and the particulate hopper (30);
a chute (32) in communication with the particulate distributor (34) and the die roll (40), wherein the particulate distributor (34) is so arranged within the particulate hopper (30) to transport particulates from the particulate hopper (30) to the die role (40) via the chute (32), and
a dough feed roll (50) adjacent to the die roll (40),
further comprising a rubber roll (60) in communication with the die roll (40).

## Patentansprüche

1. Verfahren zur Herstellung eines Formprodukts, umfassend eine nicht verzerrte, dreidimensionale Gestaltung und Partikel, die die Form der dreidimensionalen Gestaltung nicht verzerren, umfassend:
Befüllen einer Form (42) in einer Matrizenwalze (40) mit einem oder mehreren Partikeln, wobei das eine oder die mehreren Partikel von einem Partikeltrichter (30) durch einen Partikelverteiler (34), der in dem Partikeltrichter (30) bereitgestellt ist, über eine Rinne (32) zu der Matrizenwalze (40) übertragen werden;
Befüllen der Form (42) mit einem Teig, wobei der Teig von einem Teigtrichter (20) zu der Form (42) übertragen wird;
Komprimieren des Teigs in die Form (42) hinein mittels einer Teigzuführwalze (50); und
mittels einer Kautschukrolle (60) Ausgeben des komprimierten Teigs aus der Form (42), um das Formprodukt zu bilden.

2. Verfahren nach Anspruch 1, ferner umfassend Backen des Formprodukts.

3. Verfahren nach Anspruch 2, ferner umfassend Trocknen des gebackenen Formprodukts.

4. Verfahren nach Anspruch 1, ferner umfassend das Befüllen einer Verpackung mit einem oder mehreren der Formprodukte.

5. Verfahren nach Anspruch 1, wobei die Form eine oder mehrere dreidimensionale Gestaltungen aufweiset.

6. Verfahren nach Anspruch 1, wobei das Formprodukt die Partikel in einer Menge im Bereich von etwa 2 Gew.-% bis etwa 16 Gew.-% umfasst.

7. Verfahren nach Anspruch 1, wobei die Partikel eine Größe im Bereich von etwa 0,5 mm bis etwa 8 mm aufweisen.

8. Verfahren nach Anspruch 1, wobei das Formprodukt ein Nahrungsmittelprodukt ist.

9. Verfahren nach Anspruch 8, wobei das Nahrungsmittelprodukt ein Haustiernahrungsmittelprodukt ist, wobei vorzugsweise das Haustiernahrungsmittelprodukt ein Hundenahrungsmittelprodukt ist, oder wobei vorzugsweise das Nahrungsmittelprodukt ein Katzennahrungsmittelprodukt ist.

10. Verfahren nach Anspruch 9, wobei die dreidimensionale Gestaltung bei dem Hundenahrungsmittelprodukt ein Hund ist.

11. Verfahren nach Anspruch 9, wobei die dreidimensionale Gestaltung bei dem Katzennahrungsmittelprodukt eine Katze ist.

12. Rotationsformpressvorrichtung, umfassend:
einen Teigtrichter (20);
einen Partikeltrichter (30);
einen Partikelverteiler (34) innerhalb des Partikeltrichters (30);
eine Matrizenwalze (40) mit mindestens einer Form (42) in Verbindung mit dem Teigtrichter (20) und dem Partikeltrichter (30) stehend;
eine Rinne (32) in Verbindung mit dem Partikelverteiler (34) und der Matrizenwalze (40) stehend, wobei der Partikelverteiler (34) derart innerhalb des Partikeltrichters (30) angeordnet ist, dass er Partikel von dem Partikeltrichter (30) über die Rinne (32) zu der Matrizenwalze (40) transportiert, und
eine Teigzuführwalze (50) benachbart zu der Matrizenwalze (40),
ferner umfassend eine Kautschukrolle (60) in Verbindung mit der Matrizenwalze (40) stehend.

## Revendications

1. Procédé de fabrication d'un produit moulé comprenant un motif tridimensionnel non déformé et des matières particulaires qui ne déforment pas la forme du motif tridimensionnel, comprenant :
le remplissage d'un moule (42) dans un rouleau de matrice (40) avec une ou plusieurs matières particulaires, dans lequel la ou les matières particulaires sont transférées d'une trémie à matière particulaire (30) par un distributeur de matière particulaire (34), qui est fourni à l'intérieur de la trémie à matière particulaire (30), par l'intermédiaire d'une rigole (32) vers le rouleau de matrice (40) ;
le remplissage du moule (42) avec une pâte, dans lequel la pâte est transférée d'une trémie à pâte (20) vers le moule (42) ;
la compression, par un rouleau d'alimentation de pâte (50), de la pâte dans le moule (42) ; et
la libération, par un rouleau en caoutchouc (60), de la pâte compressée du moule (42) pour former le produit moulé.

2. Procédé selon la revendication 1, comprenant en outre la cuisson du produit moulé.

3. Procédé selon la revendication 2, comprenant en outre le séchage du produit moulé cuit.

4. Procédé selon la revendication 1, comprenant en outre le remplissage d'un emballage avec un ou plusieurs des produits moulés.

5. Procédé selon la revendication 1, dans lequel le moule comporte un ou plusieurs motifs tridimensionnels.

6. Procédé selon la revendication 1, dans lequel le produit moulé comprend les matières particulaires en une quantité allant d'environ 2 % à environ 16 % en poids.

7. Procédé selon la revendication 1, dans lequel les matières particulaires ont une taille allant d'environ 0,5 mm à environ 8 mm.

8. Procédé selon la revendication 1, dans lequel le produit moulé est un produit alimentaire.

9. Procédé selon la revendication 8, dans lequel le produit alimentaire est un produit alimentaire pour animal de compagnie, dans lequel, de préférence, le produit alimentaire pour animal de compagnie est un produit alimentaire pour chien ou dans lequel, de préférence, le produit alimentaire est un produit alimentaire pour chat.

10. Procédé selon la revendication 9, dans lequel le motif tridimensionnel sur le produit alimentaire pour chien est un chien.

11. Procédé selon la revendication 9, dans lequel le motif tridimensionnel sur le produit alimentaire pour chat est un chat.

12. Appareil dé moulage rotatif, comprenant :
une trémie à pâte (20) ;
une trémie à matière particulaire (30) ;
un distributeur de matière particulaire (34) à l'intérieur de la trémie à matière particulaire (30) ;
un rouleau de matrice (40) comportant au moins un moule (42) en communication avec la trémie à pâte (20) et la trémie à matière particulaire (30) ;
une rigole (32) en communication avec le distributeur de matière particulaire (34) et le rouleau de matrice (40), dans lequel le distributeur de matière particulaire (34) est disposé à l'intérieur de la trémie à matière particulaire (30) de façon à transporter les matières particulaires de la trémie à matière particulaire (30) vers le rouleau de matrice (40) par l'intermédiaire de la rigole (32) et
un rouleau d'alimentation de pâte (50) adjacent au rouleau de matrice (40),
comprenant en outre un rouleau en caoutchouc (60) en communication avec le rouleau de matrice (40).
